# EUROPEAN PATENT APPLICATION

(11) **EP 3 448 054 A1**
(43) Date of publication of application: **27.02.2019**
(21) Application number: 17867806.6
(22) Date of filing: 24.10.2017
(51) Int. Cl.: H04Q 9/00, H04M 11/00

(54) **REMOTE MONITORING SYSTEM, CENTRAL DATA COLLECTION DEVICE, FIELD DATA COLLECTION DEVICE, REMOTE MONITORING METHOD, AND PROGRAM**

(30) Priority: 02.11.2016 JP 2016215314
(71) Applicant: Mitsubishi Heavy Industries Thermal Systems, Ltd., Tokyo 108-8215 (JP)
(72) Inventor: YOKOHAMA, Koji, Tokyo 108-8215 (JP); MORIKAWA, Junji, Tokyo 108-8215 (JP); AOKI, Takao, Tokyo 108-8215 (JP)
(74) Representative: Cabinet Beau de Loménie
(86) International application number: PCT/JP2017/038303
(87) International publication number: WO 2018/084022

(57) **Abstract**

A remote monitoring system (1) comprising field data collection devices (210, 220, 230) arranged at site areas (A, B, C) that have mentioned devices arranged therein, said field data collection device collecting data strings output by the monitored devices in accordance with the operation states thereof; and a central data collection device (10) collects data strings from the field data collection device (210, 220, 230). The central data collection device (10) comprises a conversion tool storage unit (112) that stores conversion tools for each model of monitored device; and a conversion processing unit (113) that converts a data string into display-format data by using a conversion tool pertaining to the data string.

## Description

### Technical Field

The present invention relates to a remote monitoring system, a central data collecting device, a field data collecting device, a remote monitoring method, and a program.

This application is based upon and claims the benefit of priority from Japanese Patent Application No. 2016-215314, filed November 2, 2016; the entire contents of which are incorporated herein by reference.

### Background Art

At present, as an operation monitoring system for an air conditioner, there is a system which performs remote monitoring by sending operation data of the air conditioner to a remote data collecting device.

As a technique related thereto, PTL 1 discloses a monitoring system in which operation data of an air conditioner is collected by an air conditioning management device in the field at which the air conditioner is present, and a remote monitoring terminal which is remote from the field also monitors the air conditioner.

Similarly, as a technique related thereto, PTL 2 discloses a monitoring system in which operation data of an air conditioner is collected by a monitoring device in the field at which the air conditioner is present, and a center device which is remote from the field also monitors the air conditioner.

### Citation List

### Patent Literature

[PTL 1] International Publication No. 2009/118877
[PTL 2] Japanese Unexamined Patent Application Publication No. 2002-089941

### Summary of Invention

### Technical Problem

The remote monitoring system disclosed in PTL 1 or 2 may remotely monitor data of the air conditioner in the field. However, in a case where the system is introduced, and then a new monitoring target apparatus such as an air conditioner, or a water heater or a chiller other than the air conditioner is added, the data collecting device in the field is made to cope with the added monitoring target apparatus, and thus work of modifying the data collecting device in the field may be a burden.

Therefore, an object of the present invention is to provide a remote monitoring system which can alleviate work of modifying a data collecting device in the field even if a new monitoring target apparatus is added.

### Solution to Problem

According to a first aspect, there is provided a remote monitoring system including a field data collecting device that is disposed in a site area in which a monitoring target apparatus is provided and collects a data string which is output from the monitoring target apparatus according to an operation state; and a central data collecting device that collects the data string from the field data collecting device, in which the central data collecting device includes a conversion tool storage unit that stores conversion tools for each model of the monitoring target apparatus, and a conversion processing unit that converts the data string into display format data by using the conversion tools related to the data string.

According to this aspect, the remote monitoring system converts the data string output from the monitoring target apparatus into display format data not in the field data collecting device but in the central data collecting device. In other words, the remote monitoring system performs analysis of information regarding the monitoring target apparatus in the central data collecting device.

Thus, even if the number of models of the monitoring target apparatuses is increased, or a monitoring target apparatus of a new model is added in the field, this can be coped with through work of modifying the central data collecting device. Therefore, the remote monitoring system can alleviate work of modifying the field data collecting device.

The remote monitoring system can unify management of conversion tools for converting each data string into display format data in the central data collecting device, and can thus cope with addition of a new model and an increase of the number of models of monitoring target apparatuses with high efficiency in a short period of time.

Communication data between the field data collecting device and the central data collecting device is a raw engineering value before being analyzed, and is thus hard to analyze even if the data is intercepted. Therefore, the remote monitoring system can reduce the risk of information leakage.

In the remote monitoring system according to a second aspect, a data format of the data string collected by the central data collecting device is an output format of the monitoring target apparatus.

According to this aspect, since the central data collecting device collects the data strings output from the monitoring target apparatus in a state in which output format of the monitoring target apparatus is maintained, the remote monitoring system is not required to convert a data format of the data string in the field data collecting device. Therefore, even if the number of models of the monitoring target apparatuses is increased or a monitoring target apparatus of a new model is added in the field, the field data collecting device does not convert a data format, and thus the remote monitoring system can alleviate work of modifying the field data collecting device.

In the remote monitoring system according to a third aspect, the display format data is a character or a graph.

According to this aspect, the remote monitoring system converts the data string into format data suitable to display a character or a graph in the central data collecting device. Therefore, the remote monitoring system is suitable for displaying a character or a graph.

In the remote monitoring system according to a fourth aspect, the conversion tools include a data conversion table and a calculation formula.

According to this aspect, the remote monitoring system uses a data conversion table and a calculation formula to convert a data string into display format data, and can thus acquire the display format data having a large amount of information from the data string having a small amount of data. Therefore, the remote monitoring system can transmit a large amount of information to the central data collecting device for a short communication time.

In the remote monitoring system according to a fifth aspect, the field data collecting device includes a field data string storage unit that stores the data string, and the field data string storage unit accumulates the data string, and transmits the data string to the central data collecting device at a predetermined time interval.

According to this aspect, the remote monitoring system can transmit accumulated data strings to the central data collecting device from the field data collecting device at a predetermined time interval. Therefore, even if there is a time period in which data strings cannot be transmitted from the field data collecting device to the central data collecting device, the remote monitoring system can accumulate data strings in the field data collecting device in the time period in which the data strings cannot be transmitted. The remote monitoring system can transmit the data strings from the field data collecting device to the central data collecting device after the time period in which the data strings cannot be transmitted.

According to a sixth aspect, there is provided a central data collecting device which collects a data string which is output from a monitoring target apparatus according to an operation state, from a field data collecting device disposed in a site area in which the monitoring target apparatus is provided, the central data collecting device including a conversion tool storage unit that stores conversion tools for each model of the monitoring target apparatus; and a conversion processing unit that converts the data string into display format data by using the conversion tools related to the data string.

According to this aspect, instead of the field data collecting device, the central data collecting device converts the data string output from the monitoring target apparatus into display format data. In other words, the central data collecting device performs analysis of information regarding the monitoring target apparatus.

Thus, even if the number of models of the monitoring target apparatuses is increased, or a monitoring target apparatus of a new model is added in the field, this can be coped with through work of modifying the central data collecting device. Therefore, the central data collecting device can alleviate work of modifying the field data collecting device.

The central data collecting device can unify management of conversion tools for converting each data string into display format data in the central data collecting device, and can thus cope with addition of a new model and an increase of the number of models of monitoring target apparatuses with high efficiency in a short period of time.

Communication data between the field data collecting device and the central data collecting device is a raw engineering value before being analyzed, and is thus hard to analyze even if the data is intercepted. Therefore, the central data collecting device can reduce the risk of information leakage.

According to a seventh aspect, there is provided a field data collecting device which is disposed in a site area in which a monitoring target apparatus is provided and collects a data string which is output from the monitoring target apparatus according to an operation state, the field data collecting device including a field data string storage unit that stores the data string, and transmits the data string to a central data collecting device; and a display format data reception unit that receives display format data into which the data string is converted by the central data collecting device by using conversion tools for each model of the monitoring target apparatus.

According to this aspect, instead of the field data collecting device, the central data collecting device converts the data string output from the monitoring target apparatus into display format data. In other words, the central data collecting device performs analysis of information regarding the monitoring target apparatus.

Thus, even if the number of models of the monitoring target apparatuses is increased, or a monitoring target apparatus of a new model is added in the field, this can be coped with through work of modifying the central data collecting device. Therefore, work of modifying the field data collecting device is alleviated.

The central data collecting device can unify management of conversion tools for converting each data string into display format data in the central data collecting device, and thus the field data collecting device can cope with addition of a new model and an increase of the number of models of monitoring target apparatuses with high efficiency in a short period of time.

Communication data transmitted to the central data collecting device from the field data collecting device is a raw engineering value before being analyzed, and is thus hard to analyze even if the data is intercepted. Therefore, the field data collecting device can reduce the risk of information leakage.

The field data collecting device receives display format data into which a data string output from the monitoring target apparatus is converted not by the field data collecting device but by the central data collecting device.

Therefore, a user can analyze information regarding a monitoring target apparatus in each site area.

According to an eighth aspect, there is provided a remote monitoring method including a field data collecting step of causing a field data collecting device to collect a data string which is output from a monitoring target apparatus according to an operation state, the field data collecting device being disposed in a site area in which the monitoring target apparatus is provided; a central data collecting step of causing a central data collecting device to collect the data string from the field data collecting device; and a data conversion step of causing the central data collecting device to convert the data string into display format data by using conversion tools related to the data string among conversion tools for each model of the monitoring target apparatus.

According to this aspect, in the remote monitoring method, instead of the field data collecting device, the central data collecting device converts the data string output from the monitoring target apparatus into display format data. In other words, in the remote monitoring method, the central data collecting device performs analysis of information regarding the monitoring target apparatus.

Thus, even if the number of models of the monitoring target apparatuses is increased, or a monitoring target apparatus of a new model is added in the field, this can be coped with through work of modifying the central data collecting device. Therefore, in the remote monitoring method, it is possible to alleviate work of modifying the field data collecting device.

The central data collecting device can unify management of conversion tools for converting each data string into display format data in the central data collecting device, and, thus, in the remote monitoring method, it is possible to cope with addition of a new model and an increase of the number of models of monitoring target apparatuses with high efficiency in a short period of time.

Communication data between the field data collecting device and the central data collecting device is a raw engineering value before being analyzed, and is thus hard to analyze even if the data is intercepted. Therefore, in the remote monitoring method, it is possible to reduce the risk of information leakage.

According to a ninth aspect, there is provided a program causing a computer of a central data collecting device which collects a data string which is output from a monitoring target apparatus according to an operation state, from a field data collecting device disposed in a site area in which the monitoring target apparatus is provided, to function as a conversion tool storage unit that stores conversion tools for each model of the monitoring target apparatus; and a conversion processing unit that converts the data string into display format data by using the conversion tools related to the data string.

According to this aspect, instead of the field data collecting device, the central data collecting device converts the data string output from the monitoring target apparatus into display format data. In other words, the central data collecting device performs analysis of information regarding the monitoring target apparatus.

Thus, even if the number of models of the monitoring target apparatuses is increased, or a monitoring target apparatus of a new model is added in the field, this can be coped with through work of modifying the central data collecting device. Therefore, the central data collecting device can alleviate work of modifying the field data collecting device.

The central data collecting device can unify management of conversion tools for converting each data string into display format data in the central data collecting device, and can thus cope with addition of a new model and an increase of the number of models of monitoring target apparatuses with high efficiency in a short period of time.

Communication data between the field data collecting device and the central data collecting device is a raw engineering value before being analyzed, and is thus hard to analyze even if the data is intercepted. Therefore, the central data collecting device can reduce the risk of information leakage.

According to a tenth aspect, there is provided a program causing a computer of a field data collecting device which is disposed in a site area in which a monitoring target apparatus is provided and collects a data string which is output from the monitoring target apparatus according to an operation state, to function as a field data string storage unit that stores the data string, and transmits the data string to a central data collecting device; and a display format data reception unit that receives display format data into which the data string is converted by the central data collecting device by using conversion tools for each model of the monitoring target apparatus.

According to this aspect, instead of the field data collecting device, the central data collecting device converts the data string output from the monitoring target apparatus into display format data. In other words, the central data collecting device performs analysis of information regarding the monitoring target apparatus.

Thus, even if the number of models of the monitoring target apparatuses is increased, or a monitoring target apparatus of a new model is added in the field, this can be coped with through work of modifying the central data collecting device. Therefore, work of modifying the field data collecting device is alleviated.

The central data collecting device can unify management of conversion tools for converting each data string into display format data in the central data collecting device, and thus the field data collecting device can cope with addition of a new model and an increase of the number of models of monitoring target apparatuses with high efficiency in a short period of time.

Communication data transmitted to the central data collecting device from the field data collecting device is a raw engineering value before being analyzed, and is thus hard to analyze even if the data is intercepted. Therefore, the field data collecting device can reduce the risk of information leakage.

The field data collecting device receives display format data into which a data string output from the monitoring target apparatus is converted not by the field data collecting device but by the central data collecting device.

Therefore, a user can analyze information regarding a monitoring target apparatus in each site area. Advantageous Effects of Invention

According to one aspect described above, it is possible to alleviate work of modifying a data collecting device in the field even if a new monitoring target apparatus is added.

### Brief Description of Drawings

Fig. 1 is a schematic diagram of a remote monitoring system according to a first embodiment of the present invention.
Fig. 2 is a block diagram of the remote monitoring system according to the first embodiment of the present invention.
Fig. 3 is a diagram for explaining a function of a field data collecting device according to the first embodiment of the present invention.
Fig. 4 is a diagram for explaining a function of a central processing section according to the first embodiment of the present invention.
Fig. 5 is a diagram for explaining a function of the central processing section after being modified according to the first embodiment of the present invention.
Fig. 6 is a block diagram of a remote monitoring system according to a second embodiment of the present invention.
Fig. 7 is a flowchart illustrating a remote monitoring method according to the embodiment of the present invention.
Fig. 8 is a block diagram of a remote monitoring system according to a modification example of the embodiment of the present invention.

### Description of Embodiments

Hereinafter, various embodiments of the present invention will be described with reference to the drawings.

### <First Embodiment>

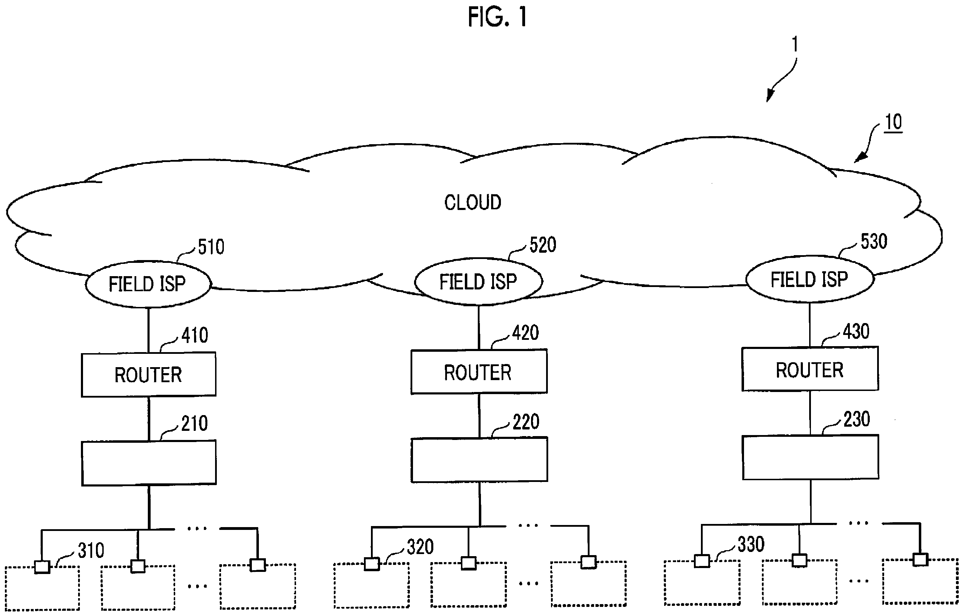

With reference to Figs. 1 to 5, a description will be made of a remote monitoring system according to a first embodiment of the present invention.

### (Configuration of remote monitoring system)

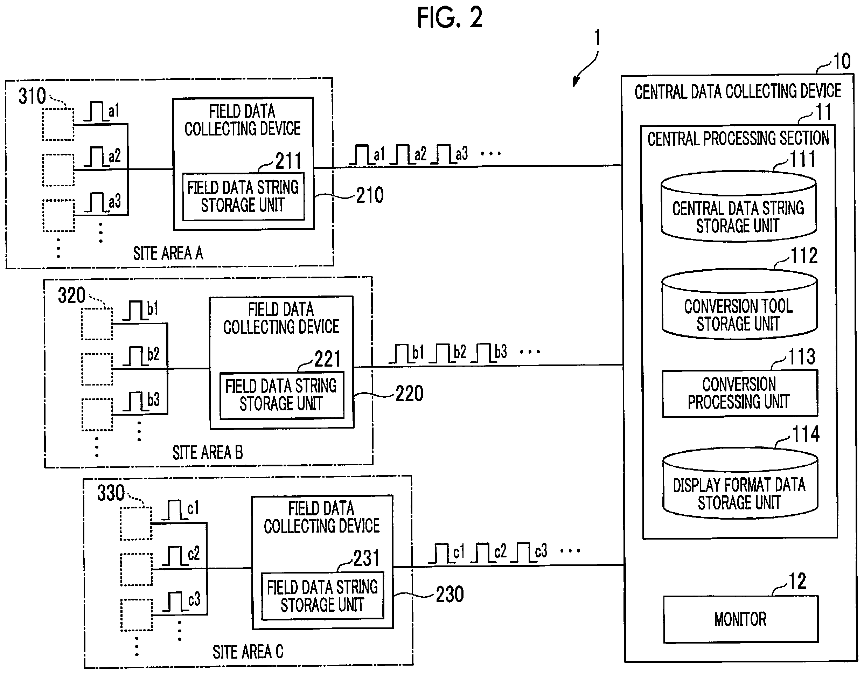

As illustrated in Figs. 1 and 2, a remote monitoring system 1 includes a central data collecting device 10 and a field data collecting devices 210, 220, and 230. The central data collecting device 10 is located remotely from the field data collecting devices 210, 220, and 230.

In the present embodiment, the central data collecting device 10 and the field data collecting device 210 are connected to each other to be able to perform communication via a router 410 and a field Internet service provider 510. Similarly, the central data collecting device 10 and the field data collecting device 220 are connected to each other to be able to perform communication via a router 420 and a field Internet service provider 520. Similarly, the central data collecting device 10 and the field data collecting device 230 are connected to each other to be able to perform communication via a router 430 and a field Internet service provider 530. In the present embodiment, a cloud is used as the central data collecting device 10.

Therefore, monitoring data from the field data collecting devices 210, 220, and 230 of respective site areas is collected in the central data collecting device 10.

The remote monitoring system 1 of the present embodiment includes three field data collecting devices, but the number of field data collecting devices is not limited to three, and may be any number. In other words, the remote monitoring system 1 may include a single field data collecting device, and may include two or four or more field data collecting devices.

As illustrated in Fig. 2, the central data collecting device 10 includes a central processing section 11 and a monitor 12. As will be described later, the central data collecting device 10 converts each data string into display format data in the central processing section 11, and displays information related to the display format data on the monitor 12.

### (Configuration of field data collecting device)

A configuration of the field data collecting device will be described in detail with reference to Fig. 2.

The field data collecting device 210 is disposed in a site area A in which a plurality of monitoring target apparatuses 310 are provided, and is connected to each of the monitoring target apparatuses 310 so as to be able to perform communication in a wireless or wired manner. The field data collecting device 210 includes a field data string storage unit 211.

The field data collecting device 220 is disposed in a site area B in which a plurality of monitoring target apparatuses 320 are provided, and is connected to each of the monitoring target apparatuses 320 so as to be able to perform communication in a wireless or wired manner. The field data collecting device 220 includes a field data string storage unit 221.

The field data collecting device 230 is disposed in a site area C in which a plurality of monitoring target apparatuses 330 are provided, and is connected to each of the monitoring target apparatuses 330 so as to be able to perform communication in a wireless or wired manner. The field data collecting device 230 includes a field data string storage unit 231.

In the present embodiment, a program which will be described later is executed, and thus the program causes a computer of the field data collecting device 210 to function as the field data string storage unit 211. In the same manner for the field data collecting device 220, the program causes a computer of the field data collecting device 220 to function as the field data string storage unit 221. In the same manner for the field data collecting device 230, the program causes a computer of the field data collecting device 230 to function as the field data string storage unit 231.

The plurality of monitoring target apparatuses 310, 320, and 330 are apparatuses monitored by the remote monitoring system 1, and transmit operation data thereof to the remote monitoring system 1. In the present embodiment, the plurality of monitoring target apparatuses 310, 320, and 330 are a combination of an air conditioner, a chiller, a water heater, a boiler, and the like.

In a case of the present embodiment, at the time of introducing the system, each model of the plurality of monitoring target apparatuses 310 is any one of four types of models such as k1, k2, k3, and k4.

Similarly, at the time of introducing the system, each model of the plurality of monitoring target apparatuses 320 is any one of four types of models such as k1, k2, k3, and k4.

Similarly, at the time of introducing the system, each model of the plurality of monitoring target apparatuses 330 is any one of four types of models such as k1, k2, k3, and k4.

As illustrated in Fig. 2, the plurality of monitoring target apparatuses 310 respectively transmit data strings a1, a2, a3,... to the field data collecting device 210 according to respective operation states thereof.

The field data collecting device 210 collects the data strings a1, a2, a3,... respectively transmitted according to operation states. The field data string storage unit 211 stores the data strings a1, a2, a3,... collected by the field data collecting device 210.

Here, the transmitted data string are operation data (operation stoppage, an operation mode, a set temperature, the room temperature, a compressor operation frequency, the temperature of each portion, a pressure, or the like) of each monitoring target apparatus, and is, for example, log data output from each monitoring target apparatus.

Similarly, the field data collecting device 220 collects the data strings b1, b2, b3,... respectively transmitted from the plurality of monitoring target apparatuses 320 according to operation states. Similarly, the field data string storage unit 221 stores the data strings b1, b2, b3,... collected by the field data collecting device 220.

Similarly, the field data collecting device 230 collects the data strings c1, c2, c3,... respectively transmitted from the plurality of monitoring target apparatuses 330 according to operation states. Similarly, the field data string storage unit 231 stores the data strings c1, c2, c3,... collected by the field data collecting device 230.

The data strings a1, a2, a3,..., the data strings b1, b2, b3,..., and the data strings c1, c2, c3,... are all data strings formed of raw engineering values. In other words, the data strings a1, a2, a3,..., the data strings b1, b2, b3,..., and the data strings c1, c2, c3,... are data strings having output formats of the respective monitoring target apparatuses.

Each of the field data string storage units 211, 221, and 231 does not analyze the data strings, stores the data strings in a state in which the output format of each monitoring target apparatus is maintained, and transmits the data strings to the central data collecting device 10 in a state in which the output format of each monitoring target apparatus is maintained.

### (Configuration of central data collecting device)

A configuration of the central data collecting device will be described in detail with reference to Fig. 2.

The central processing section 11 functionally includes a central data string storage unit 111, a conversion tool storage unit 112, a conversion processing unit 113, and a display format data storage unit 114.

In the present embodiment, a program which will be described later is executed, and thus the program causes a computer to function as the central data string storage unit 111, the conversion tool storage unit 112, the conversion processing unit 113, and the display format data storage unit 114.

The central data string storage unit 111 stores the data strings a1, a2, a3,..., the data strings b1, b2, b3,..., and the data strings c1, c2, c3,... respectively transmitted from the field data collecting devices 210, 220, and 230 to the central data collecting device 10 in a state in which the output format of each monitoring target apparatus is maintained.

The conversion tool storage unit 112 stores in advance respective conversion tools related to the models k1, k2, k3, and k4 of the plurality of monitoring target apparatuses 310. As the conversion tools, for example, a data conversion table and a calculation formula are used.

The conversion processing unit 113 converts the data strings a1, a2, a3,..., the data strings b1, b2, b3,..., and the data strings c1, c2, c3,... into display format data by using conversion tools related to the data strings stored in the central data string storage unit 111.

The display format data as a result of the conversion is, for example, numerical value data or a graph.

The display format data storage unit 114 stores each display format data obtained through conversion in the conversion processing unit 113. The display format data storage unit 114 transmits the stored display format data to the monitor 12 in response to a request from the central processing section 11.

The monitor 12 receives the display format data transmitted from the display format data storage unit 114, and displays information regarding related to the display format data.

The information displayed on the monitor 12 is, for example, numerical value data or a graph. The displayed numerical value data or graph may be information indicating data regarding a specific operation state of a specific monitoring target apparatus of a specific site area, and may be information indicating comparison between pieces of data regarding a plurality of site areas, a plurality of monitoring target apparatuses, or a plurality of operation states.

### (Function of field data collecting device)

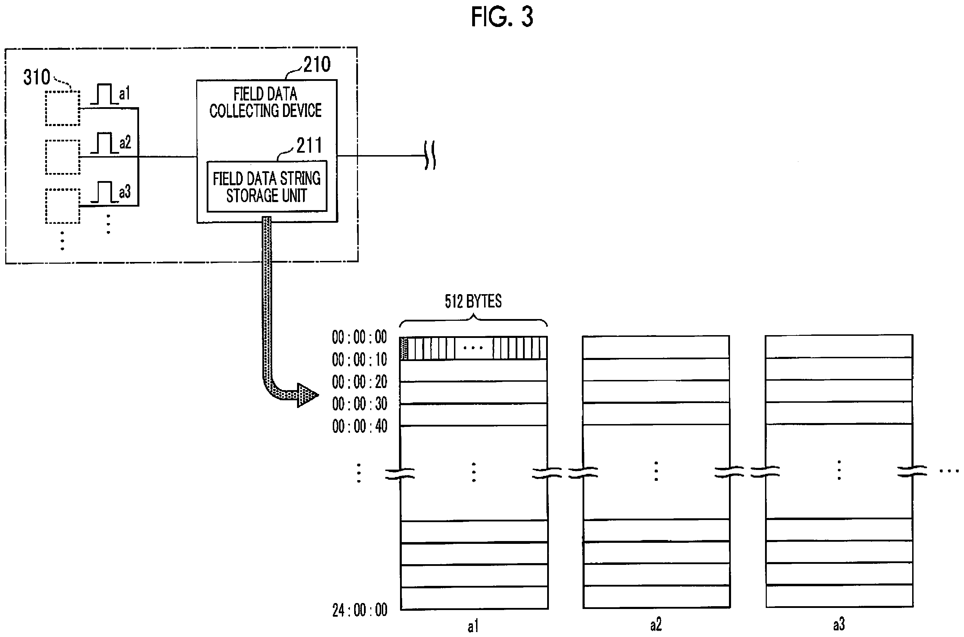

A function of the field data collecting device 210 will be described in detail with reference to Fig. 3.

A data string collected from each monitoring target apparatus 310 by the field data collecting device 210 is a data string having 1 byte (8 bits) as a basic length, and is pieces of data which are arranged without interval on the basis of data regarding an operation state. In a case of the present embodiment, a data string of 512 bytes is a data which is collected once, and the data string of 512 bytes is collected once 10 seconds.

Each data string of 512 bytes includes a single piece of a plurality of pieces of operation data of each monitoring target apparatus 310.

In order to analyze information regarding the monitoring target apparatus, it is necessary to read, for example, numerical value data of a predetermined data length (1 bit, 1 byte, 2 bytes, 4 bytes, or the like) for each piece of operation data, the unit (°C, Pa, Hz, a pulse, A, deg, Hr, or the like), or the presence or absence of a sign (±), from the data string of 512 bytes. A multiplier (for example, ×1000, ×0.001, or x2) of each piece of numerical value data is required to be defined.

On the other hand, in the data string of 512 bytes, data to be included, the capacity occupied by predetermined data, and an order of pieces of data being arranged differ depending on a model of a monitoring target apparatus. A multiplier of each piece of numerical value data also differs depending on a model of a monitoring target apparatus.

The field data string storage unit 211 of the field data collecting device 210 stores the data strings a1, a2, a3,... collected by the field data collecting device 210 for the respective monitoring target apparatuses 310 (for the respective data strings a1, a2, a3,...).

The field data string storage unit 211 stores the data strings a1, a2, a3,... in a time series in which the field data collecting device 210 collects the data strings a1, a2, a3,....

For example, the field data string storage unit 211 stores an initial data string of 512 bytes collected by the field data collecting device 210 from the time point of 00:00:00 to the time point of 00:00:10. Next, the field data string storage unit 211 stores a second data string of 512 bytes collected by the field data collecting device 210 from the time point of 00:00:10 to the time point of 00:00:20. Next, the field data string storage unit 211 stores a third data string of 512 bytes collected by the field data collecting device 210 from the time point of 00:00:20 to the time point of 00:00:30. Further, the field data string storage unit 211 stores a fourth data string of 512 bytes collected by the field data collecting device 210 from the time point of 00:00:30 to the time point of 00:00:40.

The field data string storage unit 211 stores the data strings a1, a2, a3,... in a storage structure as illustrated on a lower right part in Fig. 3, for example. In Fig. 3, numbers illustrated on the left of each data string of 512 bytes indicate a time period in which the field data collecting device 210 collects each data string of 512 bytes.

The field data string storage unit 211 accumulates each data string. In the present embodiment, the field data string storage unit 211 accumulates the respective data strings a1, a2, a3,... corresponding to 24 hours from the time point of 00:00:00 to the time point of 24:00:00.

The field data string storage unit 211 accumulates the data strings a1, a2, a3,... corresponding to 24 hours, and transmits the data strings to the central data collecting device 10 once 24 hours. The field data string storage unit 211 transmits the data strings a1, a2, a3,... corresponding to 24 hours to the central data collecting device 10 in a state in which an output format of each monitoring target apparatus 310 is maintained.

As a modification example, the field data string storage unit 211 may summarize each of the data strings a1, a2, a3,... corresponding to 24 hours into a single piece of file data, and may transmit the summarized file data to the central data collecting device 10 in a state in which an output format of each monitoring target apparatus 310 is maintained. As another modification example, the field data string storage unit 211 may summarize each of the data strings a1, a2, a3,... corresponding to 24 hours into a single file folder, and may transmit the summarized file folder to the central data collecting device 10 in a state in which an output format of each monitoring target apparatus 310 is maintained.

In a case where the field data string storage unit 211 transmits the data strings a1, a2, a3,... corresponding to 24 hours to the central data collecting device 10 in a state in which an output format of each monitoring target apparatus 310 is maintained, a correspondence relationship between a data string and the time at which the data string is collected and a correspondence relationship between a data string and a monitoring target apparatus from which the data string is collected may be unclear. In this case, among respective data strings of 512 bytes, leading data (for example, hatched data in Fig. 3) may be used as identification data of each collecting time (the time at which the data is collected by the field data collecting device) or each monitoring target apparatus may be used. In a case where the leading data is used as identification data of each collecting time or each monitoring target apparatus, the central data collecting device 10 can identify a collecting time of each data string in the field data collecting device 210 or a monitoring target apparatus which outputs each data string.

In a case where each of the data strings a1, a2, a3,... is summarized into a single piece of file data or a single file folder, the field data string storage unit 211 may write identification data of each monitoring target apparatus into each file or each folder.

As mentioned above, the function of the field data collecting device 210 has been described in detail, but the field data collecting devices 220 and 230 also have the same function as that of the field data collecting device 210.

### (Function of central data collecting device)

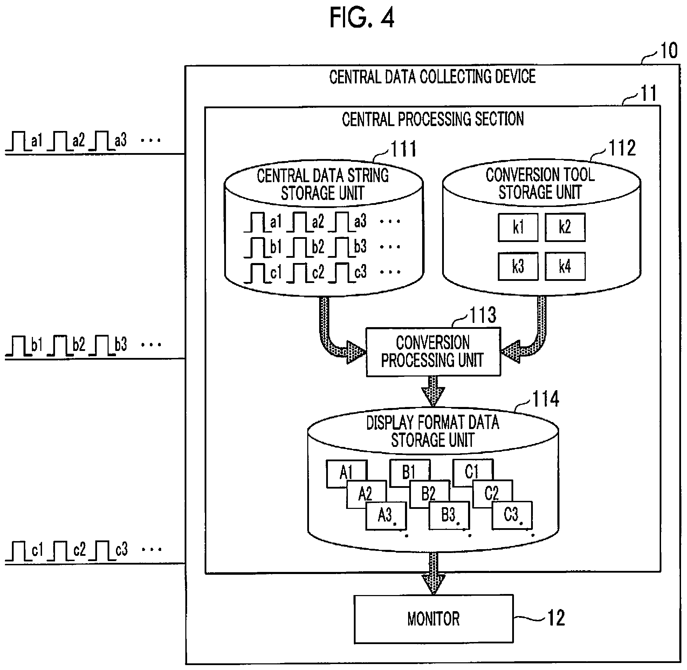

A function of the central data collecting device will be described in detail with reference to Fig. 4.

As described above, in a single data string (data string of 512 bytes), data to be included, the capacity occupied by predetermined data, and an order of pieces of data being arranged differ depending on a model of a monitoring target apparatus. A multiplier of each piece of numerical value data also differs depending on a model of a monitoring target apparatus.

Therefore, in order to convert each data string, the conversion processing unit 113 is required to specify a model of a monitoring target apparatus having transmitted each data string, and to convert the data string into display format data by using a conversion tool related to the model. Therefore, the central data collecting device functions as follows.

First, the central data string storage unit 111 transmits stored data strings to the conversion processing unit 113.

Next, in a case where the data strings are received from the central data string storage unit 111, the conversion processing unit 113 specifies a monitoring target apparatus on the basis of an order of receiving the received data strings, identification information attached to the received data strings, and the like.

On the other hand, the conversion processing unit 113 stores in advance a correspondence relationship between each monitoring target apparatus and a model of the monitoring target apparatus. Consequently, on the basis of the specified monitoring target apparatus, a model of the monitoring target apparatus having transmitted the received data strings is specified.

Next, the conversion processing unit 113 reads a conversion tool related to the specified model from the conversion tool storage unit 112. The conversion processing unit 113 converts each data string having an output format of each monitoring target apparatus into display format data by using the read conversion tool.

For example, in a case where a model of the monitoring target apparatus 310 having transmitted the data strings a1 is the model k1, when the data strings a1 is received, the conversion processing unit 113 specifies the model k1. Next, the conversion processing unit 113 reads a conversion tool related to the model k1 from the conversion tool storage unit 112. The conversion processing unit 113 converts the data strings a1 having the output format of the monitoring target apparatus 310 of the model k1 into display format data A1 by using the read conversion tool.

For example, in a case where a model of the monitoring target apparatus 310 having transmitted the data strings a2 is the model k4, when the data strings a3 is received, the conversion processing unit 113 specifies the model k4. Next, the conversion processing unit 113 reads a conversion tool related to the model k4 from the conversion tool storage unit 112. The conversion processing unit 113 converts the data strings a2 having the output format of the monitoring target apparatus 310 of the model k4 into display format data A2 by using the read conversion tool.

As mentioned above, the conversion processing unit 113 converts the respective data strings a1, a2, a3,... into the pieces of display format data A1, A2, A3,... by using the conversion tools related to the data strings. Similarly, the conversion processing unit 113 converts the respective data strings b1, b2, b3,... into the pieces of display format data B1, B2, B3,... by using conversion tools related to the data strings. Similarly, the conversion processing unit 113 converts the respective data strings c1, c2, c3, ... into the pieces of display format data C1, C2, C3,... by using conversion tools related to the data strings.

In a case where a data conversion table related to a specified model and a calculation formula related to the specified model are used as conversion tools, the conversion processing unit 113 converts a data string having an output format of a monitoring target apparatus into display format data as follows.

The data conversion table replaces a data string having an output format of a monitoring target apparatus with numerical value data having a corresponding predetermined data length (1 bit, 1 byte, 2 bytes, 4 bytes, or the like), the unit (°C, Pa, Hz, a pulse, A, deg, Hr, or the like) data, and data indicating the presence or absence of a sign (±). The calculation formula defines a multiplier of each piece of numerical value data.

In a case of a data string having an output format of a monitoring target apparatus specified to have the model k2, the conversion processing unit 113 reads a data conversion table related to the model k2, and reads a calculation formula related to the model k2. Here, for example, it is assumed that the read calculation formula is "×0.1".

As a result of conversion using the data conversion table related to the model k2, a data string having an output format of a monitoring target apparatus is replaced with, for example, "251", "°C", and "+". The replaced data is converted into display format data of "+25.1°C" in association with the read calculation formula "×0.1".

Here, in a case where a plurality of pieces of operation data are included in each data string (each data string of 512 bytes) having an output format of a monitoring target apparatus, the data conversion table outputs numerical value data, unit data, and data indicating the presence or absence of a sign (±) of each piece of operation data from a single data string. The calculation formula defines a multiplier of each piece of numerical value data.

The display format data A1, A2, A3,..., the display format data B1, B2, B3, ..., and the display format data C1, C2, C3,... obtained through conversion in the conversion processing unit 113 are stored in the display format data storage unit 114 and are also or then transmitted to the monitor 12.

### (Adding of monitoring target apparatus with new model)

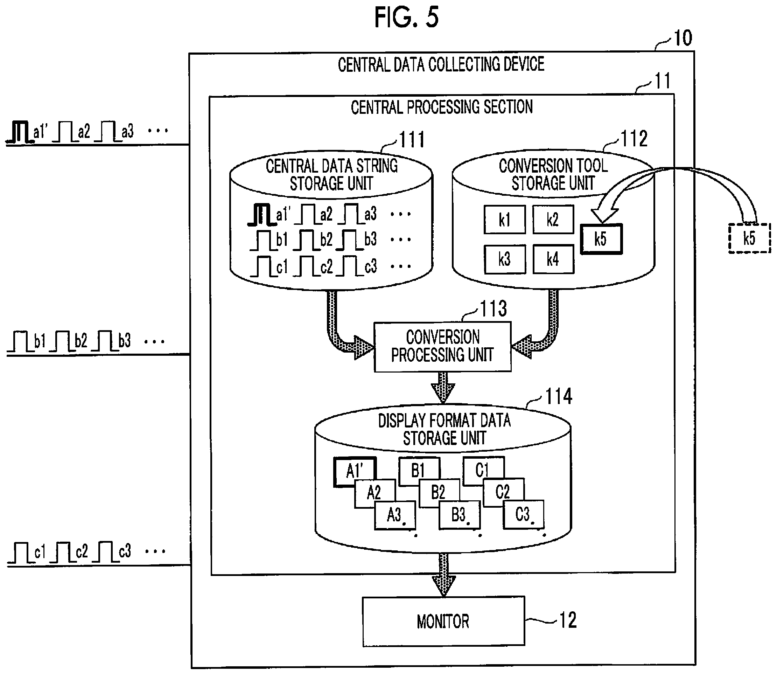

With reference to Fig. 5, a description will be made of a case where a monitoring target apparatus with a new model is added in the field.

For example, a description will be made of a case where, in the site area A, a monitoring target apparatus with a new model k5 transmitting a data strings a1' is introduced instead of the monitoring target apparatus 310 transmitting the data strings a1.

This case may be coped with by modifying the central data collecting device 10 without modifying the field data collecting device 210.

Specifically, conversion tools related to the new model k5 are added to the conversion tool storage unit 112, and the conversion processing unit 113 is modified to be able to specify the new model k5.

In a case of the present embodiment, a program is executed, and thus the program causes the computer of the central data collecting device 10 to function as the conversion tool storage unit 112 and the conversion processing unit 113. Therefore, the program for the computer of the central data collecting device 10 is rewritten, and thus the conversion tool storage unit 112 and the conversion processing unit 113 may be modified to cope with the new model k5.

Since the modification corresponding to the new model k5 is performed, in a case where the data strings a1' is received after the modification, the conversion processing unit 113 specifies the new model k5, and reads the conversion tools related to the new model k5 from the conversion tool storage unit 112. The conversion processing unit 113 converts the data strings a1' having an output format of the new model k5 into display format data A1' by using the read conversion tools.

The work of adding a new model may be performed such that a monitoring target apparatuses of a new model is introduced in each site area instead of some of a plurality of monitoring target apparatuses as described above, and may be performed such that a monitoring target apparatuses of a new model is introduced in addition to a plurality of monitoring target apparatuses.

This is also the same for a case where the number of models of monitoring target apparatuses is increased in each site area. In other words, conversion tools related to increased models may be added to the conversion tool storage unit, and the conversion processing unit may be modified such that the increased models can be specified, without modifying the field data collecting device.

### (Operations and effects of remote monitoring system)

A description will be made of operations and effects of the remote monitoring system of the present embodiment.

The remote monitoring system 1 converts the respective data strings output from the monitoring target apparatuses 310, 320, and 330 into display format data not in the field data collecting devices 210, 220, and 230 but in the central data collecting device 10. In other words, the remote monitoring system 1 performs analysis of information regarding the monitoring target apparatuses 310, 320, and 330 in the central data collecting device 10.

Thus, even if the number of models of the monitoring target apparatuses 310, 320, and 330 is increased, or the monitoring target apparatuses 310, 320, and 330 of new models are added in the field, this can be coped with through work of modifying the central data collecting device 10. Therefore, the remote monitoring system 1 can alleviate work of modifying the field data collecting devices 210, 220, and 230.

Specifically, the remote monitoring system 1 can alleviate work of updating a program of the collecting device due to function enhancement of the field data collecting devices 210, 220, and 230, and can thus alleviate hardware remodeling work such as a memory increase due to the function enhancement.

The remote monitoring system 1 can unify management of conversion tools for converting each data string into display format data in the central data collecting device 10, and can thus cope with addition of a new model and an increase of the number of models of monitoring target apparatuses with high efficiency in a short period of time.

Communication data between the field data collecting devices 210, 220, and 230 and the central data collecting device 10 is a raw engineering value before being analyzed, and is thus hard to analyze even if the data is intercepted. Therefore, the remote monitoring system 1 can reduce the risk of information leakage.

A data format of each data string collected by the central data collecting device 10 is an output format of each of the monitoring target apparatuses 310, 320, and 330. Thus, since the central data collecting device 10 collects respective data strings output from the monitoring target apparatuses 310, 320, and 330 in a state in which output formats of the monitoring target apparatuses 310, 320, and 330 are maintained, the remote monitoring system 1 is not required to convert a data format of each data string in the field data collecting devices 210, 220, and 230. Therefore, even if the number of models of the monitoring target apparatuses 310, 320, and 330 is increased or a monitoring target apparatus of a new model is added in the field, the field data collecting devices 210, 220, and 230 do not convert data formats, and thus the remote monitoring system 1 can alleviate work of modifying the field data collecting devices 210, 220, and 230.

Since display format data is converted into a character or a graph in the conversion processing unit 113, the remote monitoring system 1 converts the data strings into format data suitable to display the character or the graph. Therefore, the remote monitoring system 1 is suitable for displaying a character or a graph.

As conversion tools, a data conversion table and a calculation formula are used to convert each data string into display format data, and thus the central data collecting device 10 can acquire display format data having a large amount of information from a data string having a small amount of data. Therefore, the remote monitoring system 1 can transmit a large amount of information from the field data collecting devices 210, 220, and 230 to the central data collecting device 10 for a short communication time.

The field data string storage units 211, 221, and 231 accumulate respective data strings, and transmit the data strings to the central data collecting device 10 at predetermined time intervals, and thus the accumulated data strings can be transmitted from the field data collecting devices 210, 220, and 230 to the central data collecting device 10 at the predetermined time intervals.

In a case where there is communication interruption or communication abnormality (a communication failure or communication noise) in the router, the field Internet service provider, the field data collecting device, the central data collecting device, or the communication path, there is a probability of the occurrence of a time period in which communication cannot be performed between the central data collecting device 10 and each of the field data collecting devices 210, 220, and 230.

As described above, in the present embodiment, the field data string storage units 211, 221, and 231 accumulate respective data strings, and transmit the data strings to the central data collecting device 10 at predetermined time intervals. Consequently, the remote monitoring system 1 can transmit the accumulated data strings from the field data collecting devices 210, 220, and 230 to the central data collecting device 10 at the predetermined time intervals by avoiding a time period in which communication cannot be performed.

Therefore, even if there is a time period in which data strings cannot be transmitted from the field data collecting devices 210, 220, and 230 to the central data collecting device 10, the remote monitoring system 1 can accumulate data strings in the field data collecting devices 210, 220, and 230 in the time period in which the data strings cannot be transmitted. The remote monitoring system 1 can transmit the data strings from the field data collecting devices 210, 220, and 230 to the central data collecting device 10 after the time period in which the data strings cannot be transmitted.

### <Second Embodiment>

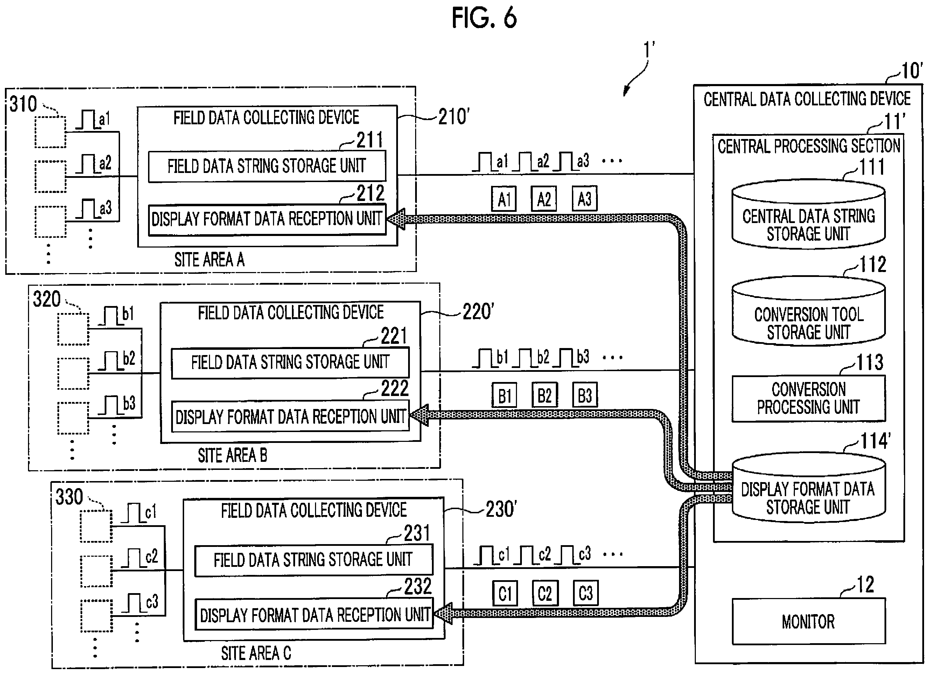

A remote monitoring system according to a second embodiment of the present invention will be described with reference to Fig. 6.

A remote monitoring system of the present embodiment is fundamentally the same as the remote monitoring system of the first embodiment, but is different in that the field data collecting device further includes a display format data reception unit.

As illustrated in Fig. 6, a remote monitoring system 1' includes a central data collecting device 10' and a field data collecting devices 210', 220', and 230'.

The field data collecting device 210' includes a field data string storage unit 211 and a display format data reception unit 212. The field data string storage unit 211 transmits the data strings a1, a2, a3,... to the central data collecting device 10' in a state in which an output format of each monitoring target apparatus is maintained.

The field data collecting device 220' includes a field data string storage unit 221 and a display format data reception unit 222. The field data string storage unit 221 transmits the data strings b1, b2, b3,... to the central data collecting device 10' in a state in which an output format of each monitoring target apparatus is maintained.

The field data collecting device 230' includes a field data string storage unit 231 and a display format data reception unit 232. The field data string storage unit 231 transmits the data strings c1, c2, c3,... to the central data collecting device 10' in a state in which an output format of each monitoring target apparatus is maintained.

In the present embodiment, a program which will be described later is executed, and thus the program causes a computer of the field data collecting device 210' to function as the field data string storage unit 211 and the display format data reception unit 212. In the same manner for the field data collecting device 220', the program causes a computer of the field data collecting device 220' to function as the field data string storage unit 221 and the display format data reception unit 222. In the same manner for the field data collecting device 230', the program causes a computer of the field data collecting device 230' to function as the field data string storage unit 231 and the display format data reception unit 232.

The remote monitoring system 1' of the present embodiment includes three field data collecting devices, but the number of field data collecting devices is not limited to three, and may be any number. In other words, the remote monitoring system 1' may include a single field data collecting device, and may include two or four or more field data collecting devices.

The central data collecting device 10' includes a central processing section 11' and a monitor 12.

The central processing section 11' functionally includes a central data string storage unit 111, a conversion tool storage unit 112, a conversion processing unit 113, and a display format data storage unit 114'.

In the present embodiment, a program which will be described later is executed, and thus the program causes a computer to function as the central data string storage unit 111, the conversion tool storage unit 112, the conversion processing unit 113, and the display format data storage unit 114'.

The display format data storage unit 114' stores each display format data obtained through conversion in the conversion processing unit 113. The display format data storage unit 114' transmits the stored display format data to the monitor 12 in response to a request from the central processing section 11'.

The display format data storage unit 114' transmits each piece of stored display format data to a field data collecting device having transmitted a data string which is a basis of the display format data.

Specifically, the display format data storage unit 114' transmits the display format data A1, A2, A3,... to the field data collecting device 210', transmits the display format data B1, B2, B3,... to the field data collecting device 220', and transmits the display format data C1, C2, C3,... to the field data collecting device 230'.

The display format data reception unit 212 of the field data collecting device 210' receives the display format data A1, A2, A3,... transmitted from the display format data reception unit 212. Similarly, the display format data storage unit 114 of the field data collecting device 220' receives the display format data B1, B2, B3,..., and the display format data reception unit 232 of the field data collecting device 230' receives the display format data C1, C2, C3,....

A description will be made of operations and effects of the remote monitoring system 1'.

In a case where information regarding a monitoring target apparatus is analyzed not by the field data collecting device but by the central data collecting device, it is hard for the field data collecting device to analyze the information regarding a monitoring target apparatus.

In the remote monitoring system 1', display format data obtained through conversion in the central data collecting device 10' can be received by each field data collecting device. Therefore, a user can analyze information regarding a monitoring target apparatus in each site area.

### <Remote monitoring method>

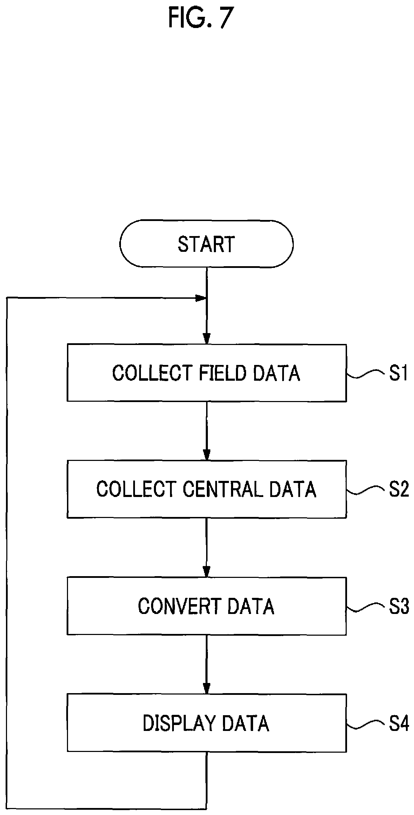

A remote monitoring method of each embodiment of the present invention will be described with reference to Fig. 7.

First, the field data collecting device disposed in a site area in which respective monitoring target apparatuses are provided collects data strings which are output from the monitoring target apparatuses according to operation states thereof (S1: field data collecting step).

After the field data collecting step S1 is performed, the central data collecting device collects the data strings from the field data collecting device (S2: central data collecting step).

After the central data collecting step S2 is performed, the central data collecting device converts the data strings into display format data by using conversion tools related to the data strings among conversion tools based on models of the monitoring target apparatuses (S3: data conversion step).

After the data conversion step S3 is performed, the display format data obtained through the conversion is displayed on the monitor (S4: data display step).

As illustrated in Fig. 7, the flow returns to the field data collecting step S1, and the processes in S1 to S4 are repeatedly performed in the same manner.

In a case where a user inputs a finishing instruction to the remote monitoring system, the repeated processes in S1 to S4 are finished.

In the above-described respective embodiments, the program for realizing various functions of the central processing section or the field data collecting device is recorded on a computer readable recording medium, and the program recorded on the recording medium is read to a computer system and is executed such that various processes are performed. Here, procedures of various processes in each CPU described above are stored in a computer readable recording medium in a format of the program, and the program is read and executed by the computer such that the various processes are performed. The computer readable recording medium is, for example, a magnetic disk, a magnetooptical disk, a CD-ROM, a DVD-ROM, and a semiconductor memory. The computer program may be delivered to a computer via communication line, and the computer having received the delivery may execute the program.

As mentioned above, some embodiments of the present invention have been described, but these embodiments are presented by way of examples, and are not intended to limit the scope of the invention. The embodiments may be realized in various other forms, and may be variously omitted, replaced, and changed without departing from the spirit of the invention. The embodiments and modifications thereof are intended to be included in the inventions disclosed in the claims and equivalents thereof as long as they are included in the scope or the spirit of the invention.

As a modification example of each embodiment, the remote monitoring system may receive a notification of abnormality in each monitoring target apparatus.

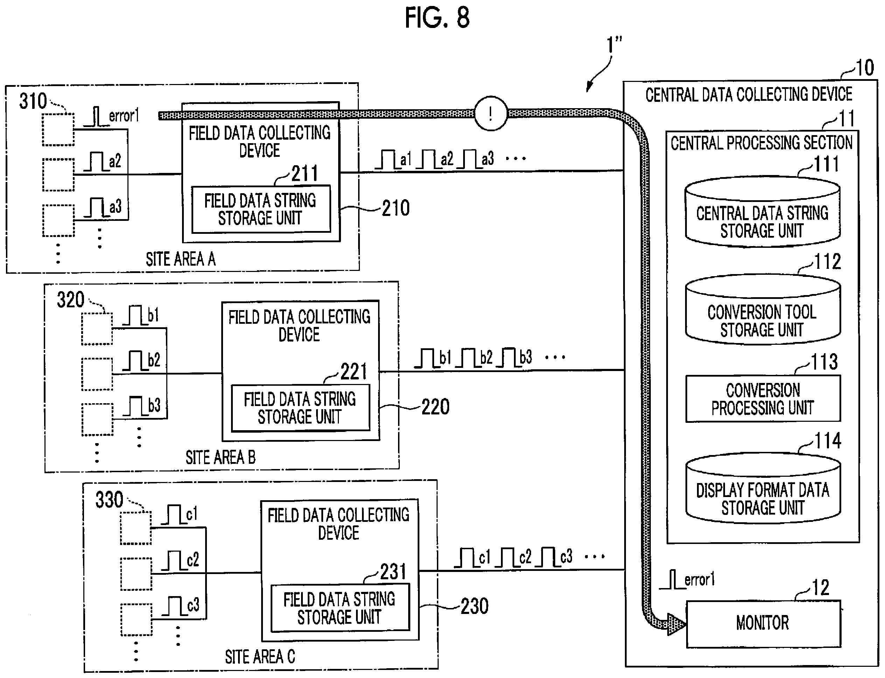

For example, as illustrated in Fig. 8, in a case where abnormality occurs in one of the monitoring target apparatuses 310, and the monitoring target apparatus 310 sends a notification of an abnormality signal error1, a remote monitoring system 1" receives the abnormality signal error1 of the monitoring target apparatus 310.

The remote monitoring system 1" having received the abnormality signal error1 immediately reports the abnormality signal error1 to the central data collecting device 10 without analyzing or accumulating the abnormality signal error 1 in the field data collecting device 210. As illustrated in Fig. 8, as the report to the central data collecting device 10, the remote monitoring system 1" transmits the received abnormality signal error1 to the monitor 12. In a case where the abnormality signal error1 is received, the monitor 12 immediately displays the abnormality in the monitoring target apparatus 310. According to the present modification example, the remote monitoring system 1" immediately displays abnormality in a monitoring target apparatus without analyzing or accumulating an abnormality report for the monitoring target apparatus, and thus a user can check the abnormality in the monitoring target apparatus in real time without delay.

As another modification example, in the remote monitoring system, the central data collecting device may detect abnormality in each piece of operation data of each monitoring target apparatus.

The central data collecting device collects respective pieces of operation data of the monitoring target apparatuses collected in each field data collecting device. Thus, in a case where the central data collecting device detects abnormality by using an abnormality determination criterion for each model (for example, a threshold value for each model), abnormality in each piece of operation data of each monitoring target apparatus can be determined according to a determination criterion specific to a model. The abnormality determination criterion for each model can be learned by using the collected operation data.

In the present embodiment, each data string which can be collected once from each monitoring target apparatus by the field data collecting device is a data string of 512 bytes, but a size of a data string is not limited to 512 bytes, and may be a larger size or a smaller size.

In the present embodiment, the field data collecting device is connected to a plurality of monitoring target apparatuses, but, as a modification example, the field data collecting device may be communicably connected to only a single monitoring target apparatus.

In the present embodiment, each field data collecting device of the remote monitoring system is remote from the central data collecting device. In order to unify management of conversion tools in the central data collecting device, and alleviate the risk of communication data information leakage between the field data collecting device and the central data collecting device and work of modifying the field data collecting device, the remote monitoring system may include a field data collecting device located close by as a modification example.

In the present embodiment, a plurality of monitoring target apparatuses are a combination of an air conditioner, a chiller, a water heater, a boiler, and the like, but monitoring target apparatuses are not limited to the combination. For example, a plurality of monitoring target apparatuses may be a combination of air conditioners of a plurality of models.

### Industrial Applicability

According to one aspect described above, it is possible to alleviate work of modifying a field data collecting device even if a new monitoring target apparatus is added.

### Reference Signs List

1: REMOTE MONITORING SYSTEM
1': REMOTE MONITORING SYSTEM
1": REMOTE MONITORING SYSTEM
10: CENTRAL DATA COLLECTING DEVICE
10': CENTRAL DATA COLLECTING DEVICE
11: CENTRAL PROCESSING SECTION
11': CENTRAL PROCESSING SECTION
12: MONITOR
111: CENTRAL DATA STRING STORAGE UNIT
112: CONVERSION TOOL STORAGE UNIT
113: CONVERSION PROCESSING UNIT
114: DISPLAY FORMAT DATA STORAGE UNIT
114': DISPLAY FORMAT DATA STORAGE UNIT
210: FIELD DATA COLLECTING DEVICE
210': FIELD DATA COLLECTING DEVICE
211: FIELD DATA STRING STORAGE UNIT
212: DISPLAY FORMAT DATA RECEPTION UNIT
220: FIELD DATA COLLECTING DEVICE
220': FIELD DATA COLLECTING DEVICE
221: FIELD DATA STRING STORAGE UNIT
222: DISPLAY FORMAT DATA RECEPTION UNIT
230: FIELD DATA COLLECTING DEVICE
230': FIELD DATA COLLECTING DEVICE
231: FIELD DATA STRING STORAGE UNIT
232: DISPLAY FORMAT DATA RECEPTION UNIT
310: MONITORING TARGET APPARATUS
320: MONITORING TARGET APPARATUS
330: MONITORING TARGET APPARATUS
410: ROUTER
420: ROUTER
430: ROUTER
510: FIELD INTERNET SERVICE PROVIDER
520: FIELD INTERNET SERVICE PROVIDER
530: FIELD INTERNET SERVICE PROVIDER

## Claims

1. A remote monitoring system comprising:
a field data collecting device that is disposed in a site area in which a monitoring target apparatus is provided and collects a data string which is output from the monitoring target apparatus according to an operation state; and
a central data collecting device that collects the data string from the field data collecting device,
wherein the central data collecting device includes
a conversion tool storage unit that stores conversion tools for each model of the monitoring target apparatus, and
a conversion processing unit that converts the data string into display format data by using the conversion tools related to the data string.

2. The remote monitoring system according to claim 1,
wherein a data format of the data string collected by the central data collecting device is an output format of the monitoring target apparatus.

3. The remote monitoring system according to claim 1 or 2,
wherein the display format data is a character or a graph.

4. The remote monitoring system according to any one of claims 1 to 3,
wherein the conversion tools include a data conversion table and a calculation formula.

5. The remote monitoring system according to any one of claims 1 to 4,
wherein the field data collecting device includes a field data string storage unit that stores the data string, and
wherein the field data string storage unit accumulates the data string, and transmits the data string to the central data collecting device at a predetermined time interval.

6. A central data collecting device which collects a data string which is output from a monitoring target apparatus according to an operation state, from a field data collecting device disposed in a site area in which the monitoring target apparatus is provided, the central data collecting device comprising:
a conversion tool storage unit that stores conversion tools for each model of the monitoring target apparatus; and
a conversion processing unit that converts the data string into display format data by using the conversion tools related to the data string.

7. A field data collecting device which is disposed in a site area in which a monitoring target apparatus is provided and collects a data string which is output from the monitoring target apparatus according to an operation state, the field data collecting device comprising:
a field data string storage unit that stores the data string, and transmits the data string to a central data collecting device; and
a display format data reception unit that receives display format data into which the data string is converted by the central data collecting device by using conversion tools for each model of the monitoring target apparatus.

8. A remote monitoring method comprising:
a field data collecting step of causing a field data collecting device to collect a data string which is output from a monitoring target apparatus according to an operation state, the field data collecting device being disposed in a site area in which the monitoring target apparatus is provided;
a central data collecting step of causing a central data collecting device to collect the data string from the field data collecting device; and
a data conversion step of causing the central data collecting device to convert the data string into display format data by using conversion tools related to the data string among the conversion tools for each model of the monitoring target apparatus.

9. A program causing a computer of a central data collecting device which collects a data string which is output from a monitoring target apparatus according to an operation state, from a field data collecting device disposed in a site area in which the monitoring target apparatus is provided, to function as:
a conversion tool storage unit that stores conversion tools for each model of the monitoring target apparatus; and
a conversion processing unit that converts the data string into display format data by using the conversion tools related to the data string.

10. A program causing a computer of a field data collecting device which is disposed in a site area in which a monitoring target apparatus is provided and collects a data string which is output from the monitoring target apparatus according to an operation state, to function as:
a field data string storage unit that stores the data string, and transmits the data string to a central data collecting device; and
a display format data reception unit that receives display format data into which the data string is converted by the central data collecting device by using conversion tools for each model of the monitoring target apparatus.

## Amended claims

### Amended claims under Art. 19.1 PCT

1. [Amended] A remote monitoring system comprising:
a field data collecting device that is disposed in a site area in which a monitoring target apparatus is provided and collects a data string which is output from the monitoring target apparatus according to an operation state; and
a central data collecting device that collects the data string from the field data collecting device,
wherein the central data collecting device includes
a conversion tool storage unit that stores conversion tools for each model of the monitoring target apparatus, and
a conversion processing unit that converts the data string into display format data by using the conversion tools related to the data string, and
wherein the field data collecting device includes a display format data reception unit that receives the display format data.

2. The remote monitoring system according to claim 1,
wherein a data format of the data string collected by the central data collecting device is an output format of the monitoring target apparatus.

3. The remote monitoring system according to claim 1 or 2,
wherein the display format data is a character or a graph.

4. The remote monitoring system according to any one of claims 1 to 3,
wherein the conversion tools include a data conversion table and a calculation formula.

5. The remote monitoring system according to any one of claims 1 to 4,
wherein the field data collecting device includes a field data string storage unit that stores the data string, and
wherein the field data string storage unit accumulates the data string, and transmits the data string to the central data collecting device at a predetermined time interval.

6. [Amended] A central data collecting device which collects a data string which is output from a monitoring target apparatus according to an operation state, from a field data collecting device disposed in a site area in which the monitoring target apparatus is provided, the central data collecting device comprising:
a conversion tool storage unit that stores conversion tools for each model of the monitoring target apparatus;
a conversion processing unit that converts the data string into display format data by using the conversion tools related to the data string; and
a display format data storage unit that stores the display format data, and transmits the display format data to the field data collecting device.

7. A field data collecting device which is disposed in a site area in which a monitoring target apparatus is provided and collects a data string which is output from the monitoring target apparatus according to an operation state, the field data collecting device comprising:
a field data string storage unit that stores the data string, and transmits the data string to a central data collecting device; and
a display format data reception unit that receives display format data into which the data string is converted by the central data collecting device by using conversion tools for each model of the monitoring target apparatus.

8. [Amended] A remote monitoring method comprising:
a field data collecting step of causing a field data collecting device to collect a data string which is output from a monitoring target apparatus according to an operation state, the field data collecting device being disposed in a site area in which the monitoring target apparatus is provided;
a central data collecting step of causing a central data collecting device to collect the data string from the field data collecting device; and
a data conversion step of causing the central data collecting device to convert the data string into display format data by using conversion tools related to the data string among the conversion tools for each model of the monitoring target apparatus,
wherein the field data collecting device receives the display format data.

9. [Amended] A program causing a computer of a central data collecting device which collects a data string which is output from a monitoring target apparatus according to an operation state, from a field data collecting device disposed in a site area in which the monitoring target apparatus is provided, to function as:
a conversion tool storage unit that stores conversion tools for each model of the monitoring target apparatus;
a conversion processing unit that converts the data string into display format data by using the conversion tools related to the data string; and
a display format data storage unit that stores the display format data, and transmits the display format data to the field data collecting device.

10. A program causing a computer of a field data collecting device which is disposed in a site area in which a monitoring target apparatus is provided and collects a data string which is output from the monitoring target apparatus according to an operation state, to function as:
a field data string storage unit that stores the data string, and transmits the data string to a central data collecting device; and
a display format data reception unit that receives display format data into which the data string is converted by the central data collecting device by using conversion tools for each model of the monitoring target apparatus.

Statement under Art. 19.1 PCT
Claims 1 and 8 were amended such that the content that the field data collecting device "receives the display format data" is added.

Claims 6 and 9 were amended such that the content that "transmits the display format data" to the field data collecting device is added.

These amendments are based on Claim 7 and Claim 10 and the disclosure in the paragraph [0083] of the specification or the like originally attached to the application, and thus do not fall under the addition of new matter.
